# EUROPÄISCHE PATENTSCHRIFT

(11) **EP 1 290 270 B1**
(45) Veröffentlichungstag und Bekanntmachung des Hinweises auf die Patenterteilung: **13.10.2004**
(21) Anmeldenummer: 01951585.7
(22) Anmeldetag: 13.06.2001
(51) Int. Cl.: D06M 15/61, C08J 7/04, C09D 179/02, C08G 73/02

(54) **VERWENDUNG VON ACYLIERTEN POLYAMINEN ZUR MODIFIZIERUNG VON OBERFLÄCHEN**
USE OF ACYLATED POLYAMINES FOR THE MODIFICATION OF SURFACES
UTILISATION DE POLYAMINES ACYLEES POUR LA MODIFICATION DE SURFACES

(30) Priorität: 13.06.2000 DE 10029028
(43) Veröffentlichungstag der Anmeldung: 12.03.2003
(73) Patentinhaber: BASF AKTIENGESELLSCHAFT, 67056 Ludwigshafen (DE)
(72) Erfinder: ANDRE, Valerie, 67063 Ludwigshafen (DE); BERTLEFF, Werner, 68519 Viernheim (DE); BORZYK, Oliver, 67346 Speyer (DE); HUFF, Jürgen, 67063 Ludwigshafen (DE); NÖRENBERG, Ralf, 55218 Ingelheim (DE); ZIRNSTEIN, Michael, 69198 Schriesheim (DE)
(74) Vertreter: Pohl, Michael, Dr.
(86) Internationale Anmeldenummer: PCT/EP2001/006720
(87) Internationale Veröffentlichungsnummer: WO 2001/096655

(56) Entgegenhaltungen:
- WO-A-90/10747
- WO-A-94/00418
- WO-A-98/27263
- US-A- 3 597 265
- US-A- 4 540 747
- US-A- 4 543 285
- US-A- 5 221 491
- US-A- 5 269 952

## Beschreibung

Die vorliegende Erfindung betrifft die Modifizierung von Oberflächeneigenschaften teilchen-, linien-, flächenförmiger oder dreidimensionaler Gebilde.

Gegenstände aus synthetischen Materialien, wie duroplastische oder thermoplastische Kunststoffe, weisen in der Regel hydrophobe Oberflächeneigenschaften auf. Vielfach sind hydrophobe Eigenschaften jedoch unerwünscht, wenn die Gegenstände beklebt, beschichtet, bedruckt, gefärbt oder lackiert werden sollen, da die meisten Klebstoffe, Beschichtungsmittel oder Anstrichmittel auf hydrophoben Oberflächen nur unzureichende Haftung zeigen. Hydrophobe Eigenschaften sind auch bei flächenförmigen textilen Gebilden, wie insbesondere Vliesstoffen unerwünscht. Vliesstoffe werden z. B. als Putz- und Wischtücher, Spültücher und Servietten verwendet. Bei diesen Anwendungen ist es wichtig, dass z. B. verschüttete Flüssigkeiten, wie Milch, Kaffee usw. beim Aufwischen rasch und vollständig aufgesaugt und feuchte Oberflächen möglichst vollständig getrocknet werden. Ein Putztuch saugt Flüssigkeiten umso rascher auf, je schneller deren Transport auf der Faseroberfläche erfolgt, wobei Fasern mit hydrophiler Oberfläche von wässrigen Flüssigkeiten leicht und rasch benetzt werden.

Um die Oberflächen von Folien oder Formkörpern zu hydrophilieren sind verschiedene Verfahren üblich. Z. B. können die Oberflächen von Kunststoffartikeln durch gasförmiges Fluor aktiviert werden. Dieses Verfahren erfordert allerdings das Arbeiten mit dem hochgiftigen Gas Fluor unter einem erhöhten apparativen Aufwand. Daneben werden Korona- oder Plasmabehandlungen angewandt, um die Hydrophilie der Oberfläche verschiedener Materialien wie Kunststoffen oder Metallen zu erhöhen.

Zur Verbesserung der Wasseraufnahmeeigenschaften von Vliesstoffen werden auch oberflächenaktive hydrophilierende Agentien, wie Emulgatoren, Tenside oder Netzmittel eingesetzt. Hierdurch wird eine ausgezeichnete Anfangshydrophilie erreicht. Diese Vliesstoffe weisen aber den Nachteil auf, dass die hydrophilen Agentien durch Wasser oder andere wässrige Medien allmählich ausgewaschen werden.

Nach mehrmaligem Wasserkontakt wird das Erzeugnis zunehmend hydrophober. Ein weiterer Nachteil der bekannten oberflächenaktiven Agentien besteht in der starken Herabsetzung der Grenzflächenspannung von Wasser, so dass in vielen Anwendungen, insbesondere bei Hygiene- und Windelvliesen die Permeationsneigung und das Netzvermögen der aufgesaugten Flüssigkeit unerwünscht erhöht ist.

Die WO 98/27263 offenbart beständig hydrophile Polymerbeschichtungen für Polyester-, Polypropylen- und ähnliche Fasern. Die Beschichtung enthält bestimmte Polyoxypropylamine oder Polypropylenoxidpolymere und Ethylentherephthalateinheiten enthaltende hydrophile Polyestercopolymere.

Die WO 97/00351 beschreibt dauerhaft hydrophile Polymerbeschichtungen für Polyester-, Polyethylen- oder Polypropylenfasern und - gewebe, die hydrophile Copolyester sowie Polypropylenoxidpolymere enthalten.

Der vorliegenden Erfindung liegt die Aufgabe zugrunde, hydrophil ausgerüstete teilchen-, linien-, flächenförmige oder dreidimensionale Gebilde sowie ein Verfahren zur Erhöhung der Oberflächenhydrophilie derartiger Gebilde bereitzustellen.

Erfindungsgemäß wird diese Aufgabe gelöst durch die Verwendung bestimmter Polyamine nach Anspruch 1, ein Verfahren zur Modifizierung der Oberflächeneigenschaften gemäß den Ansprüchen 9 und 10, sowie ein teilchen-, linien-, flächenförmiges oder dreidimensionales Gebilde nach Anspruch 11.

Bevorzugte Ausgestaltungen des erfindungsgemäßen Gebildes sind linien- oder flächenförmige textile Gebilde. Andere bevorzugte Ausgestaltungen des erfindungsgemäßen Gebildes sind Kunststofffolien oder Kunststoffformkörper.

Der Begiff "teilchenförmige Gebilde" umfaßt den Bereich der feinen Pigmente bis hin zu makroskopischen Partikeln. Dazu zählen insbesondere solche mit einer Teilchengröße von 1 nm bis 10 mm, insbesondere 10 nm bis 1 mm, die vorzugsweise in einem Medium dispergierbar oder dispergiert sind. Als Beispiele lassen sich Pigmente, mineralische oder metallische Füllstoffe oder unbelebte organische Materialien nennen.

Unter linienförmigen Gebilden werden insbesondere Fasern, Filamente, Garne, Fäden und dergleichen verstanden. Flächenförmige Gebilde sind insbesondere Gewebe, Gewirke, Filze, Vliese oder Vliesstoffe, wobei letztere bevorzugt sind. Zur Herstellung eines Vliesstoffs wird ein Gefüge von Fasern (Vlies) abgelegt, das anschließend nach unterschiedlichen Verfahren zu Vliesstoffen verfestigt wird. Z. B. wird das Vlies mit einem wässrigen Bindemittel, z. B. einem Polymerlatex behandelt und anschließend, gegebenenfalls nach Entfernung von überschüssigem Bindemittel, getrocknet und gegebenenfalls gehärtet. Flächenförmige Gebilde sind auch Folien, Papier und vergleichbare zweidimensionale Gebilde.

Unter linienförmigen textilen Gebilden werden im Rahmen der vorliegenden Anmeldung auch Textilverbundstoffe, wie z. B. Teppiche, kaschierte und laminierte Textilien etc. verstanden.

Dreidimensionale Gebilde sind allgemein Formkörper unterschiedlichster Dimensionen. Dazu zählen insbesondere Formkörper aus Holz, Papier, Metallen, Kunststoffen, keramischen Trägern, Geweben aus natürlichen oder synthetischen Fasern in Form von Fluffs, Tissues etc.

Bevorzugte Ausgestaltungen des erfindungsgemäßen Gebildes sind linien- oder flächenförmige textile Gebilde. Andere bevorzugte Ausgestaltungen des erfindungsgemäßen Gebildes sind Kunststofffolien oder Kunststoffformkörper.

Vorzugsweise umfassen die erfindungsgemäß eingesetzten Gebilde wenigstens ein natürliches oder synthetisches polymeres Material.

Beispiele für derartige Materialien sind:
1. Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen, wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d. h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere radikalisch oder mittels Katalysator, wobei der Katalysator gewöhnlich ein oder mehrere Metalle der Gruppe IVb, Vb, VIb oder VIII enthält. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1. genannten Polymeren, z. B. Mischungen von Polypropylen mit Polyisobutylen, Polypropylen mit Polyethylen (z. B. PP/HDPE, PP/LDPE) und Mischungen verschiedener Polyethylentypen (z. B. LDPE/HDPE).
3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexandien, Dicyclopentadien oder Ethylidennorbornen; ferner Mischungen solcher Copolymere untereinander und mit unter 1. genannten Polymeren, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren, wie z. B. Polyamiden.
4. Kohlenwasserstoffharze, inklusive hydrierte Modifikationen davon (z. B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6. genannten Copolymeren, wie sie z. B. als sogenannte ABS-, MBS-, ASA- oder AES-Polymere bekannt sind.
8. Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9. genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd, oder deren Copolymere mit Bisglycidylethern.
13. Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide z. B. ausgehend von p-Phenylendiamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylen-isophthalamid. Geeignet sind auch Block-Copolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Geeignet sind ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamidimide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z. B. von Epoxyacrylaten, Urethanacrylaten oder Polyesteracrylaten.
25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern, wie z. B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Geeignet sind ganz allgemein binäre und polynäre Mischungen (Polyblends) der vorgenannten Polymeren, wie z. B. PP/EPDM, Polyamid/EPDM oder ABS, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt sind teilchen-, linien-, flächenförmige oder dreidimensionale Gebilde, die wenigstens ein polymeres Material umfassen, das ausgewählt ist unter Polyolefinen, Polyestern, Polyamiden, Polyacrylnitril, Polyaromaten, Styrol-Arcylnitril-Copolymeren (SAN), Acrylnitril-Butadien-Stryrol-Copolymeren (ABS), Polyurethanen und Mischungen (Polyblends) der vorgenannten Polymeren.

Vorzugsweise handelt es sich bei den erfindungsgemäß eingesetzten Gebilden um Kunststofffasern insbesondere aus Polyolefinen, wie Polyethylen und Polypropylen, Polyestern, Polyacrylnitril und Polyamiden, wie z. B. Polyamid 6 und Polyamid 66.

Vorzugsweise handelt es sich bei den erfindungsgemäß eingesetzten Gebilden weiterhin um flächenförmige Gebilde und insbesondere um Filme oder Folien. Diese umfassen vorzugsweise ein Polymer, das ausgewählt ist unter Polyolefinen, wie Polyethylen und/oder Polypropylen, Polymeren halogenierter Monomerer, wie z. B. Polyvinylchlorid und/oder Polytetrafluorethylen, Polyestern und Mischungen davon.

Vorzugsweise handelt es sich bei dem erfindungsgemäß eingesetzten Gebilde weiterhin um einen Formkörper. Dieser umfasst vorzugsweise wenigstens ein polymeres Material, das ausgewählt ist unter Polyolefinen, wie z. B. Polyethylen und/oder Polypropylen, Polyaromaten, wie Polystyrol, Polymeren halogenierter Monomerer, wie Polyvinylchlorid und/oder Polytetrafluorethylen, Polyestern, Polyacrylnitril, Styrol-Acrylnitril-Copolymeren, Acrylnitril-Butadien-Styrol-Copolymeren, Polyamiden, wie Polyamid 6 und/oder Polyamid 66, Polyurethanen und Mischungen davon.

Erfindungsgemäß wird zur Oberflächenmodifizierung, speziell zur Hydrophilisierung, wenigstens ein acyliertes Polyamin eingesetzt, worin wenigstens ein Teil der Polyamin-Stickstoffatome Acylreste der Formel I

R¹-CO- (I)

trägt, worin R¹ für Wasserstoff, C₁-C₂₇-Alkyl, C₇-C₂₇-Alkenyl oder C₆-C₁₀-Aryl steht, wobei die Alkyl-, Alkenyl und Arylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen.

Im Rahmen der vorliegenden Erfindung umfaßt der Ausdruck C₁-C₂₇-Alkyl geradkettige und verzweigte Alkylgruppen. Dazu zählen zum einen kürzerkettige C₁- bis C₆-Alkylgruppen. Bevorzugte C₁bis C₆-Alkylgruppen sind insbesondere Methyl, Ethyl, n-Propyl, Isopropyl, n-Butyl, 1-Methylpropyl, 2-Methylpropyl, 1,1-Dimethylethyl, n-Pentyl, 1-Methylbutyl, 2-Methylbutyl, 3-Methylbutyl, n-Hexyl. Bevorzugt handelt es sich um geradkettige und verzweigte C₁- bis C₃-Alkylgruppen.

Dazu zählen weiterhin längerkettige C₇- bis C₂₇-Alkylgruppen. Der Ausdruck C₇- bis C₂₇-Alkyl umfasst geradkettige und verzweigte Alkylgrüppen. Vorzugsweise handelt es sich dabei um geradkettige und verzweigte C₉- bis C₂₅-Alkyl-, besonders bevorzugt um C₁₀- bis C₂₂- und speziell C₁₁- bis C₁₉-Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen insbesondere n-Octyl, Ethylhexyl, 1,1,3,3-Tetramethylbutyl, n-Nonyl, n-Decyl, n-Undecyl, n-Dodecyl, n-Tridecyl, Myristyl, Pentadecyl, Palmityl (=Cetyl), Heptadecyl, Octadecyl, Nonadecyl, Arachinyl, Behenyl, Lignocerenyl, Cerotinyl, Melissinyl etc.

C₇- bis C₂₇-Alkenyl steht vorzugsweise für geradkettige und verzweigte Alkenylgruppen, die einfach, zweifach oder mehrfach ungesättigt sein können. Bevorzugt handelt es sich um C₉- bis C₂₅-, insbesondere um C₁₀- bis C₂₂- und speziell um C₁₁- bis C₁₉-Alkenylgruppen. Dazu zählen insbesondere Octenyl, Nonenyl, Decenyl, Undecenyl, Dodecenyl, Tridecenyl, Tetradecenyl, Pentadecenyl, Hexadecenyl, Heptadecenyl, Octadecenyl, Nonadecenyl, Linolyl, Linolenyl, Elaostearyl etc.

Vorzugsweise ist der Rest R¹ unsubstituiert oder weist einen, zwei, drei oder vier der zuvor genannten Substituenten auf. Der maximal erreichbare Substitutionsgrad wird dabei in der Regel nur von der Kettenlänge des Restes R¹ begrenzt.

Bevorzugt steht R¹ für einen C₁- bis C₂₇-Hydroxyalkylrest oder - alkenylrest, der eine, zwei, drei oder vier, vorzugsweise eine oder zwei Hydroxygruppen aufweist. Vorzugsweise steht der Rest R¹ für einen Hydroxyalkylrest, der sich formal von einer Hydroxycarbonsäure durch Entfernen der Carbonsäuregruppe ableitet. Bevorzugte Hydroxycarbonsäuren sind z. B. C₂-C₇-Monohydroxycarbonsäuren, wie z. B. Glykolsäure, Milchsäure, 4-Hydroxybuttersäure, 5-Hydroxypentansäure, 6-Hydroxyhexansäure und Mischungen davon. Geeignete Monohydroxycarbonsäuren sind weiterhin C₈- bis C₂₈-Monohydroxycarbonsäuren, wie z. B. 10-Hydroxydecansäure, 11-Hydroxyundecansäure, 12-Hydroxystearinsäure, Rizinolsäure sowie Hydroxyfettsäuren, die z. B. durch Hydrierung von Epoxyfettsäuren erhältlich sind. Geeignete C₈- bis C₂₈-Dihydroxycarbonsäuren sind auch z. B. durch hydrolytische Ringöffnung von Epoxifettsäuren erhältlich.

Vorzugsweise steht R¹ weiterhin für einen C₁- bis C₂₇-Aminoalkylrest oder -alkenylrest, der eine, zwei, drei oder vier, vorzugsweise eine oder zwei Aminogruppen aufweisen kann. Die Stickstoffatome der Aminogruppen können dabei gegebenenfalls einen oder zwei Substituenten, die ausgewählt sind unter Alkyl oder Acyl aufweisen. Bevorzugte Alkylsubstituenten der Aminogruppen sind die zuvor genannten C₁- bis C₆-Alkylgruppen. Bevorzugte Acylsubstituenten der Aminogruppen sind C₁- bis C₆-Acylgruppen, insbesondere Formyl und Acetyl. Vorzugsweise weisen die Stickstoffatomeder Aminogruppen keine Substituenten auf.

Bevorzugt steht der Rest R¹ für einen Aminoalkylrest oder -Alkenylrest, der sich formal von einer C₁- bis C₂₇-Monoaminocarbonsäure durch Entfernen der Carbonsäuregruppen ableitet. Dazu zählen insbesondere 2-Aminocarbonsäuren wie Glycin, Alanin, Valin, Lysin, 6-Aminohexansäure, 11-Aminoundecansäure und Mischungen davon.

Bevorzugt steht R¹ für einen C₆- bis C₁₀-Arylrest, der einen, zwei, drei oder vier, vorzugsweise einen oder zwei der zuvor genannten Substituenten aufweisen kann. Besonders bevorzugt steht der Rest R¹ für einen C₆- bis C₁₀-Arylrest, der sich formal von einer aromatischen Carbonsäure, Hydroxycarbonsäure oder Aminocarbonsäure durch Entfernen der Carbonsäuregruppe ableitet. Dazu zählen vorzugsweise Benzoesäure, 2-Hydroxybenzoesäure, 3-Hydroxybenzoesäure, 4-Hydroxybenzoesäure, 2-Aminobenzoesäure, 3-Aminobenzoesäure, 4-Aminobenzoesäure, 1-Naphthalincarbonsäure, 2-Naphthalincarbonsäure, 1-Hydroxy-2-naphthoesäure, 2-Hydroxy-1-naphthöesäure, 2-Hydroxy-3-naphthoesäure, 6-Hydroxy-2-naphthoesäure, 3-Amino-1-naphthoesäure, 4-Amino-1-naphthoesäure, 8-Amino-1-naphthoesäure und Mischungen davon. Die zuvor genannten aromatischen Hydroxy- und/oder Aminocarbonsäuren können zusätzlich an den Hydroxy- und/oder Aminogruppen alkyliert oder acyliert sein. Bevorzugt sind C₁- bis C₆-Alkyl- oder Acylreste.

Vorzugsweise weisen 5 bis 100% besonders bevorzugt 15 bis 90%, insbesondere 30 bis 85% der Polyamin-Stickstoffatome einen Acylrest der Formel I auf. Die Prozentwerte beziehen sich dabei auf die Stickstoffatome des Polyamins insgesamt, d. h. auf die Summe aus primären, sekundären und, falls vorhanden tertiären Aminstickstoffen.

Bevorzugt beträgt der Gewichtsmengenanteil der Reste R¹ höchstens 75 Gew.-%, besonders bevorzugt höchstens 60 Gew.-%, insbesondere höchstens 40 Gew.-%, bezogen auf das gesamte mittlere Molekulargewicht der acylierten polymeren Polyamine.

Eine bevorzugte Ausführungsform der Erfindung sind Gebilde, wie zuvor beschrieben, wobei ein Teil der Polyamin-Stickstoffatome Acylreste der allgemeinen Formel II

R²-CO- (II)

trägt, worin R² für einen C₇-C₂₇-Alkylrest oder einen C₇-C₂₇-Alkenylrest steht, wobei die Alkyl- und Alkenylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen, und ein Teil der Polyamin-Stickstoffatome Acylreste der allgemeinen Formel III

R³-CO- (III)

trägt, worin R³ für Wasserstoff, einen C₁-C₆-Alkylrest oder einen C₆-C₁₀-Arylrest steht, wobei die Alkyl- und Arylgruppen mindestens eine Substituenten, der ausgewählt ist unter Hydroxy, Alkoxy, Alkoxycarbonyl oder NE³E⁴ tragen können, wobei E³ und E⁴ gleich oder verschieden sein können und für Wasserstoff, Alkyl oder Acyl stehen.

Bevorzugte Reste R² sind die zuvor genannten, gegebenenfalls substituierten, C₇- bis C₂₇-Alkyl- oder -Alkenylreste R¹.

Bevorzugte Reste R³ sind die zuvor genannten, gegebenenfalls substituierten, C₁- bis C₆-Alkylreste und C₆- bis C₁₀-Arylreste R¹.

Besonders bevorzugt steht R² für einen unsubstituierten C₇- bis C₂₇-Alkyl- oder -Alkenylrest.

Besonders bevorzugt steht R³ für Wasserstoff, einen unsubstituierten C₁- bis C₆-Alkylrest oder einen unsubtituierten C₆- bis C₁₀-Arylrest.

Bevorzugt weisen die Reste R² und R³ eine Differenz der Kohlenstoffatomanzahl von mindestens 4, insbesondere mindestens 6 und speziell mindestens 10, auf.

Vorzugsweise sind etwa 5 bis 100 %, bevorzugter 15 bis 90 %, insbesondere 30 bis 85 %, speziell 40 bis 80 % der Polyamin-Stickstoffe acyliert. Der Grad der Acylierung bezieht sich dabei auf die Summe von Acylresten der allgemeinen Formeln II und III.

Die erfindungsgemäß eingesetzten acylierten polymeren Polyamine mit Acylresten der Formeln II und III der allgemeinen Formel I sind z. B. durch Umsetzung wenigstens eines Polyamins, bevorzugt wenigstens eines Polyalkylenpolyamins, insbesondere wenigstens eines Polyethylenimins, mit wenigstens einer Carbonsäure der allgemeinen Formel

R¹-COOH

oder einem Derivat davon erhältlich.

Die erfindungsgemäß eingesetzten acylierten polymeren Polyamine mit Acylresten der Formeln II und III sind erhältlich durch Umsetzung wenigstens eines Polyamins, bevorzugt wenigstens eines Polyalkylenpolyamins, insbesondere wenigstens eines Polyethylenimins, mit wenigstens einer Carbonsäure R²-COOH oder einem Derivat davon und wenigstens einer Carbonsäure R³-COOH oder einem Derivat davon.

Dazu kann man ein polymeres Polyamin mit
a) wenigstens einer Carbonsäure der allgemeinen Formel II.1

   R²-COOH (II.1)

   worin
   - R²: die zuvor angegebenen Bedeutungen besitzt, oder einem Ester, Anhydrid oder Halogenid davon, und
b) wenigstens einer Carbonsäure der allgemeinen Formel III.1

   R³-COOH (III.1)

   worin
   R³ die zuvor angegebenen Bedeutungen besitzt, oder einem Ester, Anhydrid oder Halogenid davon,
umsetzen.

Geeignete polymere Polyamine sind lineare oder verzweigte Polymere, bevorzugt verzweigte Polymere. Bevorzugt weisen diese acylierbare sekundäre Aminogruppen in der Polymerkette auf. Zusätzlich können diese Polymere endständige, primäre Aminogruppen und/oder tertiäre Aminogruppen in der Polymerkette aufweisen.

Nach einer geeigneten Ausführungsform können die amidierbaren Polyalkylenpolyamine streng oder im Wesentlichen linear aufgebaut sein. Solche Polymere weisen dann ausschließlich oder im Wesentlichen primäre und sekundäre Aminogruppen auf. Bevorzugt werden Polyalkylenpolyamine eingesetzt, die verzweigt sind. Dabei umfassen die Polyamin-Stickstoffatome nicht nur primäre und sekundäre, sondern auch tertiäre Aminogruppen. Letztere sind einer Umsetzung in einer Amidierungsreaktion nicht zugängig. Vorzugsweise wird ein Polyalkylenpolyamin mit einem gewichtsmittleren Molekulargewicht von etwa 500 bis 1 000 000, bevorzugt etwa 1 000 bis 800 000, bevorzugter 1 500 bis 200 000, insbesondere 2 000 bis 50 000, eingesetzt. Bevorzugte Polyalkylenpolyamine sind z. B. Polyethylenimine.

Geeignete Polyethylenimine sind nach üblichen, dem Fachmann bekannten Verfahren erhältlich und werden kommerziell vertrieben. Geeignete Polyethylenimine sind alle Polymere, die durch kationisch initiierte Polymerisation von Ethylenimin (Aziridin) und/oder N-substituierten Aziridinen erhältlich sind. Vorzugsweise handelt es sich um Homopolymere von Ethylenimin. Als Katalysatoren zur kationischen Polymerisation von Ethyleniminen können z. B. Brönsted-Säuren, wie Schwefelsäure, Phosphorsäure, p-Toluolsulfonsäure, oder Carbonsäuren, wie Ameisensäure, Essigsäure oder Propionsäure, oder Lewis-Säuren, wie Halogenide, beispielsweise Zinkchlorid oder Alkylhalogenide, wie Methylchlorid, Ethylchlorid, Benzylchlorid oder Ethylenchlorid, eingesetzt werden. Geeignete Polyethylenimine können auch durch Umsetzung von Ethylenchlorid mit Ammoniak und Aminen erhalten werden. Polymerisate dieser Art sind Handelsprodukte. Der Anteil an tertiären Aminogruppen beträgt bei den verzweigten Polyalkylenpolyaminen z. B. 0,5 bis 40 Mol-%, wie etwa 10 bis 35 Mol-%, bezogen auf die Gesamtmenge der Polyamin-Stickstoffatome. Bei der Umsetzung der Polyalkylenpolyamine mit den zuvor genannten Carbonsäuren kann unter Umständen auch ein unerheblicher Anteil der Polyamin-Stickstoffatome unter Salzbildung reagieren. Gegebenenfalls werden Salze z. B. bei der Umsetzung von tertiären Aminogruppen mit Carbonsäuren erhalten. Dadurch wird der Einsatz der erfindungsgemäßen polymeren Polyamine als Hydrophilisierufngsmittel im Allgemeinen nicht beeinträchtigt.

Bevorzugt steht in der Formel II.1 der Rest R² für einen der zuvor genannten C₇- bis C₂₇-Alkyl- oder Alkenylreste.

Bevorzugt ist die Carbonsäure der Formel II.1 ausgewählt unter Caprinsäure, Laurinsäure, Myristinsäure, Palmitinsäure, Stearinsäure, Isostearinsäure, Ölsäure, Linolsäure, Arachidonsäure, Erucasäure, Behensäure, und Mischungen davon.

Bevorzugt wird ein Gemisch aus natürlich vorkommenden Carbonsäuren der allgemeinen Formel II.1 eingesetzt, wie z. B. Kokosfett, das im Wesentlichen Laurin- und Myristinsäure enthält, Talgfett, das überwiegend gesättigte und ungesättigte C₁₄-, C₁₆- und C₁₈-Carbonsäuren enthält, Sojaöl, Leinöl, Rapsöl, Fischöl etc. Vorzugsweise handelt es sich bei den langkettigen Carbonsäuren um C₁₂bis C₁₈-Carbonsäuren und Gemische davon.

Werden Gemische langkettiger Carbonsäuren eingesetzt, so können diese z. B. etwa 0 bis 10 Gew.-%, kurzkettige Carbonsäuren enthalten. Insbesondere Carbonsäuregemische aus natürlicher Herkunft enthalten unter Umständen einen Anteil an kurzkettigen Carbonsäuren.

Vorzugsweise handelt es sich bei der Carbonsäure der Formel III.1 um Ameisensäure, Essigsäure, Propionsäure, Buttersäure, oder eine Mischung davon. Insbesondere handelt es sich bei der Carbonsäure der Formel III.1 um Ameisensäure und/oder Essigsäure.

Die Herstellung der bevorzugt erfindungsgemäß eingesetzten acylierten polymeren Polyamine erfolgt nach an sich bekannten Methoden, beispielsweise durch Umsetzung der oben erwähnten Polyalkylenpolyamine mit wenigstens einer langkettigen Carbonsäure oder einem Derivat davon und mit wenigstens einer kurzkettigen Carbonsäure oder einem Derivat davon (Amidierung).

Das Polyamin kann gewünschtenfalls zuerst mit der/den langkettigen und dann mit der/den kurzkettigen Carbonsäure(n) oder zuerst mit der/den kurzkettigen Carbonsäure(n) oder gleichzeitig mit einem Gemisch davon umgesetzt werden. Bevorzugt wird das Polyamin in einem ersten Reaktionsschritt mit wenigstens einer langkettigen Carbonsäure und anschließend in einem zweiten Reaktionsschritt mit wenigstens einer kurzkettigen Carbonsäure umgesetzt. Die Edukte werden im ersten Reaktionsschritt in einem solchen molaren Verhältnis eingesetzt, dass, bezogen auf den Gesamtstickstoffgehalt des Polyamins (einschließlich gegebenenfalls vorhandener tertiärer Aminogruppen), 0,3 bis 40 Mol-%, bevorzugt 0,6 bis 25 Mol-%, insbesondere 1 bis 15 Mol-% der Polyamin-Stickstoffe acyliert werden und einen Acylrest der Formel II aufweisen. Die dabei erhaltenen, teilweise acylierten polymeren Polyamine können gewünschtenfalls vor ihrer weiteren Umsetzung nach üblichen Verfahren isoliert und gegebenenfalls gereinigt werden. Bevorzugt erfolgt der zweite Reaktionsschritt in dem gleichen Reaktionsgefäß wie der erste. Im zweiten Reaktionsschritt werden das teilweise acylierte Polyamin und wenigstens eine kurzkettige Carbonsäure in einem solchen molaren Verhältnis eingesetzt, dass, bezogen auf den Gesamtstickstoffgehalt des Polyamins (einschließlich gegebenenfalls vorhandener tertiärer Aminogruppen), 5 bis 100 %, bevorzugt 15 bis 90 %, insbesondere 30 bis 85 %, speziell 40 bis 80 %, der Polyamin-Stickstoffe acyliert werden.

Die Amidierung kann unter üblichen Bedingungen ohne Zusatz eines Katalysator oder unter Verwendung eines sauren oder basischen Katalysators durchgeführt werden. Geeignete saure Katalysatoren sind beispielsweise Säuren, wie Lewis-Säuren, z. B. Schwefelsäure, p-Toluolsulfonsäure, phosphorige Säure, hypophosphorige Säure, Phosphorsäure, Methansulfonsäure, Borsäure, Aluminiumchlorid, Bortrifluorid, Tetraethylorthotitanat, Zinndioxid, Dibutylzinndilaurat oder Gemische davon. Geeignete basische Katalysatoren sind beispielsweise Alkoholate, wie Natriummethylat oder Natriumethylat, Alkalimetallhydroxide, wie Kaliumhydroxid, Natriumhydroxid oder Lithiumhydroxid, Erdalkalimetalloxide, wie Magnesiumoxid oder Calciumoxid, Alkali- und Erdalkalimetallcarbonate, wie Natrium-, Kalium- und Calciumcarbonat, Phosphate, wie Kaliumphosphat, und komplexe Metallhydride, wie Natriumborhydrid.

Wird ein zusätzlicher Katalysator eingesetzt, dann im Allgemeinen in Mengen von 0,05 bis 10 Gew.-%, vorzugsweise 0,1 bis 5 Gew.-%, bezogen auf die Gesamtmenge der Ausgangsstoffe.

Die Umsetzung kann in einem geeigneten Lösungsmittel oder vorzugsweise lösungsmittelfrei durchgeführt werden. Bei Verwendung eines Lösungsmittels sind beispielsweise Kohlenwasserstoffe, wie Toluol oder Xylol, Acetonitril, N,N-Dimethylformamid, N,N-Dimethylacetamid, N-Methylpyrrolidon, Diethylenglykoldimethylether, Ethylenglykoldimethylether, Ethylencarbonat, Propylencarbonat etc. geeignet. Im Allgemeinen wird das Lösungsmittel während der Umsetzung oder nach beendeter Umsetzung abdestilliert. Diese Destillation kann gegebenenfalls unter Schutzgas, wie Stickstoff oder Argon, erfolgen.

Die Amidierung erfolgt bei Verwendung einer Carbonsäure im Allgemeinen bei einem Druck im Bereich von 5 mbar bis Normaldruck und bei einer Temperatur im Bereich von 60 bis 220 °C, vorzugsweise 120 bis 180 °C. Bei Verwendung eines Carbonsäureesters erfolgt die Amidierung im Allgemeinen bei 30 bis 220 °C, vorzugsweise bei 50 bis 120 °C, und bei einem Druck im Bereich von 5 mbar bis Normaldruck. Die Reaktionszeiten liegen im Allgemeinen im Bereich von 1 bis 15 Stunden. Der Grad der Umsetzung lässt sich über die Menge an entferntem Reaktionswasser bzw. Reaktionsalkohol verfolgen. Nicht umgesetzte Carbonsäure wird im Allgemeinen nach beendeter Umsetzung in üblicher Weise entfernt, beispielsweise im Vakuum, durch Extraktion oder Strippen.

Alternativ kann man die erfindungsgemäßen acylierten polymeren Polyamine auch durch Umsetzung wenigstens eines Polyamins mit wenigstens einem geeigneten Carbonsäurederivat, wie einem Carbonsäurehalogenid, z. B. einem Carbonsäurechlorid, einem Carbonsäureanhydrid oder einem gemischten Carbonsäureanhydrid, erhalten.

Auf diese Weise werden Produkte erhalten, bei denen etwa 10 bis 100 %, z. B. etwa 20 bis 95 % der theoretisch acylierbaren (d. h. der primären und sekundären) Aminogruppen acyliert sind. Primäre Aminogruppen werden dabei im Allgemeinen nur monoacyliert. Dabei kann der praktisch maximal erreichbare Acylierungsgrad gleich groß oder geringer sein als der theoretisch maximal erreichbare Acylierungsgrad. Im Allgemeinen liegt der praktisch maximal erreichbare Acylierungsgrad bei etwa 70 bis 100 % des theoretisch maximal erreichbaren Acylierungsgrades. Im Allgemeinen werden Produkte mit sehr guten Hydrophilierungseigenschaften sowohl beim praktisch maximal erreichbaren Acylierungsgrad als auch unterhalb davon erhalten. Zur Herstellung von Produkten mit im Wesentlichen maximalem praktischen Acylierungsgrad kann man so vorgehen, dass wenigstens eine der Carbonsäuren, vorzugsweise wenigstens eine kurzkettige Carbonsäure, in einem Überschuss gegenüber den amidierbaren Aminogruppen eingesetzt wird. Nichtumgesetzte Carbonsäure kann nach Beendigung der Umsetzung wie zuvor beschrieben entfernt werden.

Nach einer speziellen Ausführungsform zur Herstellung acylierter polymerer Polyamine kann man das Polyamin zuerst mit einer langkettigen Carbonsäure zu einem teilacylierten Polyamin umsetzen und dieses dann mit einer kurzkettigen Carbonsäure weiter umsetzen, wobei das Molmengenverhältnis von kurzkettiger Carbonsäure zu acylierbaren Aminogruppen des teilacylierten Polyamins so gewählt wird, dass die kurzkettige Carbonsäure in einem Überschuss eingesetzt wird. Nichtumgesetzte Carbonsäure wird abschließend entfernt.

Das zuvor beschriebene erfindungsgemäße Verfahren zur Herstellung acylierter polymerer Polyamine führt zu Produkten, bei denen die Aminogruppen im Wesentlichen acyliert und nicht in Salze überführt werden. Ein geringer Anteil an Salzgruppen ist für den Einsatz der acylierten Polyamine als Hydrophilierungsmittel unkritisch.

Erfindungsgemäß einsetzbare acylierte polymere Polyamine sind auch durch ringöffnende Polymerisation eines Monomerengemisches erhältlich, das wenigstens ein 4,5-Dihydrooxazol und/oder 5,6-Dihydro-4H-1,3-oxazin, jeweils mit einem der zuvor beschriebenen Reste R² in 2-Position, und wenigstens ein 4,5-Dihydrooxazol und/oder 5,6-Dihydro-4H-1,3-oxazin, jeweils mit einem der zuvor beschriebenen Reste R³ in 2-Position, enthält.

Die ringöffnende Polymerisation von in 2-Position substituierten 4,5-Dihydrooxazolen und/oder 5,6-Dihydro-4-H-1,3-oxazinen führt zu streng linearen Polyaminen. Die Monomere werden in solchen molaren Mengen eingesetzt, dass etwa 0,3 bis 40 %, bevorzugt 0,6 bis 25 %, insbesondere 1 bis 15 % der Polyamin-Stickstoffatome einen Acylrest der Formel I aufweisen. Werden ausschließlich in 2-Position mit Resten R² und R³ substituierte 4,5-Dihydrooxazole bzw. 5,6-Dihydro-4H-1,3-oxazine eingesetzt, so erhält man acylierte polymere Polyamine, die vollständig acyliert sind. Gewünschtenfalls kann man diese dann einer partiellen Hydrolyse nach bekannten Verfahren unterziehen. So können auch bei der Herstellung der erfindungsgemäßen Polyamine durch kationische Polymerisation Produkte erhalten werden, bei denen 5 bis 100 %, bevorzugt 15 bis 90 %, insbesondere 30 bis 85 % der Polyamin-Stickstoffatome acyliert sind.

Die Herstellung der erfindungsgemäß eingesetzten acylierten polymeren Polyamine durch kationische ringöffnende Polymerisation erfolgt nach üblichen, dem Fachmann bekannten Verfahren.

Geeignete Initiatoren der kationischen Polymerisation sind z. B. Brönsted-Säuren, wie Perchlorsäure und Trifluormethansulfonsäure, Lewis-Säuren, wie Bortrifluorid, Aluminiumtrifluorid, gegebenenfalls zusätzlich mit Wasser oder Chlorwasserstoff, und Kombinationen von Alkyl- und Aralkylhalogeniden mit Lewis-Säuren.

Ein weiterer Gegenstand der Erfindung ist die Verwendung von acylierten Polyaminen, worin wenigstens ein Teil der Polyamin-Stickstoffatome Acylreste der allgemeinen Formel I

R¹-CO- (I)

trägt, worin R¹ für Wasserstoff, C₁-C₂₇-Alkyl, C₇-C₂₇-Alkenyl oder C₆-C₁₀-Aryl steht, wobei die Alkyl-, Alkenyl- und Arylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen, zur Modifizierung der Oberflächeneigenschaften fester Stoffe.

Ein weiterer Gegenstand der Erfindung ist ein Verfahren zur Modifizierung der Oberflächeneigenschaften teilchen-, linien-, flächenförmiger oder dreidimensionaler Gebilde, bei dem man auf die Oberfläche davon eine wirksame Menge eines acylierten polymeren Polyamins aufbringt, worin wenigstens ein Teil der Polyamin-Stickstoffatome Acylreste der Formel I

R¹-CO- (I)

trägt, worin R¹ für Wasserstoff, C₁-C₂₇-Alkyl, C₇-C₂₇-Alkenyl oder C₆-C₁₀-Aryl steht, wobei die Alkyl-, Alkenyl- und Arylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen.

Ein weiterer Gegenstand der Erfindung ist ein Verfahren zur Modifizierung der Oberflächeneigenschaften teilchen-, linien-, flächenförmiger oder dreidimensionaler Gebilde, bei dem man den Werkstoff, aus dem das Gebilde besteht, mit einer wirksamen Menge eines acylierten polymeren Polyamins, worin wenigstens ein Teil der Polyamin-Stickstoffatome Acylreste der Formel I

R¹-CO- (I)

tragen, worin R¹ für Wasserstoff, C₁-C₂₇-Alkyl, C₇-C₂₇-Alkenyl oder C₆-C₁₀-Aryl steht, modifiziert und hieraus das Gebilde herstellt.

Die Polymere können in Mischungen oder in Kombination mit oberflächenaktiven Substanzen, wie z. B. anionischen, nichtionischen oder kationischen Tensiden bzw. Netzmitteln, eingesetzt werden. Sie können auch in Mischung mit weiteren Polymeren eingesetzt werden, wobei dadurch unter Umständen noch eine Verstärkung der oberflächenmodifizierenden Wirkung erzielt werden kann.

Die erfindungsgemäß eingesetzten acylierten polymeren Polyamine eignen sich in vorteilhafter Weise zur Modifizierung der Oberflächeneigenschaften teilchen-, linien-, flächenförmiger oder dreidimensionaler Gebilde. Der Begriff "Modifizierung der Oberflächeneigenschaften" wird im Rahmen der vorliegenden Erfindung weit verstanden. Dazu zählt vor allem die Hydrophilierung, worunter in der Regel eine Verbesserung der Benetzbarkeit mit Wasser bzw. einer wässrigen Flüssigkeit verstanden wird. Eine verbesserte Benetzbarkeit geht in der Regel einher mit einer schnelleren und/oder vermehrten Flüssigkeitsaufnahme und/oder einer verbesserten Flüssigkeitsretention, im Allgemeinen auch unter Druck. Zur "Modifizierüng von Oberflächen" gehört erfindungsgemäß aber auch eine Verbesserung der Haftungswirkung, eine verbesserte antistatische Wirkung, eine Antibeschlagwirkung, verbesserte Trageeigenschaften, z. B. bei Hygieneprodukten, und/oder ein verbesserter Griff.

Die erfindungsgemäßen Gebilde eignen sich im Allgemeinen vorteilhaft für alle Einsatzbereiche, bei denen Wasser oder wässrige Flüssigkeiten mit in unmodifiziertem Zustand im Wesentlichen hydrophoben Materialien in Kontakt kommen. Dazu zählt insbesondere das rasche Aufsaugen und/oder der rasche Transport von Wasser in an sich hydrophobe Materialien. Die erfindungsgemäßen Gebilde sind weiterhin im Allgemeinen dort vorteilhaft einsetzbar, wo durch Modifizierung von Oberflächen im Sinne einer Hydrophilierung verbesserte Hafteigenschaften, verbesserte antistatische Eigenschaften, verbesserte Antibeschlageigenschaften, ein verbesserter Griff und/oder ein verbesserter Tragekomfort erreicht werden kann.

Die erfindungsgemäßen Gebilde eignen sich vorteilhaft in oder als Synthesefasern, Geweben, Gewirken, Vliesstoffen, Filzen, Textilverbundstoffen, wie z. B. Teppichen, kaschierten und laminierten Textilien etc. Sie eignen sich weiterhin in vorteilhafter Weise für den Einsatz in Windeln, Hygieneeinlagen, Putz- und Wischtüchern, Spültüchern, Servietten, Landwirtschafts- und/oder Geotextilien sowie für Filteranwendungen.

Die acylierten Polyamine sind als Hydrophiliermittel für die oben genannten Materialien, insbesondere für Synthesefasern, beispielsweise solche aus Polyethylen, Polypropylen, Polyestern, Polyacrylnitril und Polyamiden geeignet. Außerdem eignen sich die acylierten Polyamine zur Verbesserung der Bedruckbarkeit und Klebbarkeit von Filmen und Folien, beispielsweise solchen aus Polyethylen, Polypropylen, Polyvinylchlorid, Polytetrafluorethylen und Polyestern.

Außerdem lassen sich die antistatischen Eigenschaften von Filmen und Folien durch Verwendung acylierter Polyamine verbessern.

Die Verwendung acylierter Polyamine führt bei Formkörpern ebenfalls zu einer Verbesserung der Oberflächeneigenschaften, so dass diese besser bedruckbar oder beklebbar sind und bessere antistatische Eigenschaften besitzen. Typische Formkörper sind beispielsweise aus Polyethylen, Polypropylen, Polystyrol, Polyvinylchlorid, Polytetrafluorethylen, Polyestern, Polyacrylnitril, Styrol-Acrylnitril-Copolymeren (SAN), Acrylnitril-Butadien-Styrol-Terpolymeren (ABS), Polyamiden, wie Polyamid 6 oder Polyamid 6,6, Polyurethanen und/oder Mischungen der vorgenannten Kunststoffe aufgebaut.

Außerdem führt die Verwendung von acylierten Polyaminen zu einer Verbesserung der Oberflächenleitfähigkeit von hydrophoben, nichtleitenden Materialien, insbesondere den vorgenannten Kunststoffen, und verbessert damit deren antistatische Eigenschaften. Ferner sind die acylierten Polyamine geeignet, die Beschlagsneigung von Kunststofffolien zu reduzieren.

Der Vorteil der erfindungsgemäßen Mittel gegenüber bekannten Hydrophiliermitteln liegt außerdem darin, dass sie nicht zu einer nennenswerten Herabsetzung der Oberflächenspannung von Wasser führen.

Die Ausrüstung der erfindungsgemäßen teilchen-, linien-, flächenförmigen oder dreidimensionalen Gebilde mit den acylierten Polyaminen kann nach den Verfahren erfolgen, wie man sie üblicherweise zur Hydrophilierung der vorgenannten Gebilde mit Hydrophiliermitteln des Standes der Technik anwendet. Üblicherweise behandelt man hierzu das Gebilde mit einer verdünnten, vorzugsweise wässrigen Lösung des acylierten Polyamins in einer für die Art des Gebildes üblichen Weise, z. B. durch Spülen, Tauchen, Besprühen, Bepflatschen, oder ähnlichen Methoden, wie sie üblicherweise bei der Ausrüstung von textilen Geweben oder Folien eingesetzt werden. Der Gehalt der Lösungen an acylierten Polyaminen liegt in der Regel im Bereich von wenigstens 0,01 bis 20 Gew.-% und vorzugsweise 0,1 bis 10 Gew.-%, bezogen auf das Gewicht der Lösung. Vorzugsweise setzt man zur Behandlung wässrige Lösungen der acylierten Polyamine ein. Die zur Hydrophilierung erforderliche Menge an acylierten Polyaminen wird von der Oberfläche absorbiert und verbleibt nach dem Trocknen auf ihr haften. Die zur Erzielung einer wirksamen Hydrophilierung erforderlichen Mengen stellen sich dabei automatisch ein und sind äußerst gering. Bei Gebilden mit glatter Oberfläche wie Folien und ähnlichen Gebilden reichen bereits 0,1 mg/m² acyliertes Polyamin aus.

In einer anderen Ausgestaltung des erfindungsgemäßen Verfahrens zur Hydrophilierung von Oberflächen kann man das acylierte Polyamin auch dem Werkstoff, aus dem das Gebilde aufgebaut ist, zusetzen und anschließend hieraus das Gebilde herstellen. Beispielsweise kann man bei Ausrüstung von thermoplastischen Kunststoffen das acylierte Polyamin als Feststoff mit dem Kunststoffmaterial kompoundieren. Das so ausgerüstete Kunststoffmaterial wird dann nach den üblichen Verfahren zu Folien, beispielsweise durch Extrusion, oder zu Fasermaterialien, beispielsweise durch ein Schmelzspinnverfahren weiter verarbeitet.

Die einfache Anwendbarkeit der erfindungsgemäß eingesetzten acylierten Polyamine erlaubt den Einsatz in vielen Anwendungsbereichen, beispielsweise als Hydrophiliermittel für Vliesstoffe, die z. B. in Windeln, Hygieneeinlagen, Textilien, Landwirtschaftsoder Geotextilien oder Filteranlagen eingesetzt werden. Die mit acylierten Polyaminen ausgerüsteten Kunststofffasern können ihrerseits-zu Geweben und zu Textilien weiterverarbeitet werden. Hierdurch wird die Wasserdampfdurchlässigkeit und der Kapillartransport von Schweiß verbessert sowie das Anschmutzverhalten gegenüber vielen hydrophoben Schmutzarten verringert. Außerdem wird die Wiederablösbarkeit von Schmutz positiv beeinflusst. Weiterhin kann man die acylierten Polyamine als Antistatikausrüstung für Kunststofffolien oder Siliziumwafer verwenden.

Ein geeignetes Maß zur Beurteilung der Hydrophilie/Hydrophobie der Oberfläche eines teilchen-, linien-, flächenförmigen oder dreidimensionalen Gebildes ist die Messung des Randwinkels von Wasser an der jeweiligen Oberfläche (siehe z. B. Römp, Chemielexikon, 9. Auflage, S. 372 "Benetzung", Georg Thieme Verlag (1995). Dabei spricht man in der Regel von hydrophoben Oberflächen, wenn der Kontaktwinkel von Wasser größer als 90° ist. Bevorzugt bewirkt der Einsatz von acylierten polymeren Polyaminen eine Abnahme des Randwinkels um mindestens 5°, bevorzugt um mindestens 10°, gegenüber der unmodifizierten hydrophoben Oberfläche.

Vorteilhafterweise werden bei den erfindungsgemäßen Gebilden, die aus dem Stand der Technik bekannten nachteiligen Auswirkungen auf die Grenzflächenspannung von wässrigen Lösungen sowie eine erhöhte Migrationsneigung in der Regel nicht beobachtet.

Vorteilhafterweise zeichnen sich die erfindungsgemäß eingesetzten acylierten polymeren Polyamine sowie mit Ihnen oberflächenmodifizierte Gebilde durch eine besonders gute Verträglichkeit mit Polymerschmelzen aus. Sie eignen sich somit in der Regel auch als Additive zu einer Schmelze von polymeren Faser- bzw. Formkörperrohstoffen. Die acylierten polymeren Polyamine können jedoch auch als Nachbehandlungsmittel zur Modifizierung der Gebilde eingesetzt werden.

Die Erfindung wird anhand der folgenden nichteinschränkenden Beispiele näher erläutert.

### Beispiele

### Meßmethode A: Randwinkelmessung

Das Substrat wird mit einer 0,5% Gew.%igen Lösung des Additivs 30 min bei 21°C unter Rühren behandelt. Die Probe wird geteilt, eine Hälfte wird unmittelbar nach der Behandlung getrocknet (RW1), die andere Hälfte wird ca. 1 Sekunde in destilliertes Wasser getaucht und dann getrocknet (RW2). Die Randwinkel an beiden Proben werden mit destilliertem Wasser bei Raumtemperatur bestimmt.

### Meßmethode B: Messung der Hydrophilie

### Substrat: Polypropylenvlies

Behandlung: Das Vlies wird mit einer Lösung des Additives einer Konzentration von 0,5 Gew.-% behandelt und getrocknet. Hydrophilietest: Auf das zu messende Substrat wird ein Tropfen Wasser aufgebracht. Die Netzung des Vlieses durch das Wasser wird visuell mittels einer 10 Punkteskala beurteilt (keine Netzung 0 Punkte, vollständige Netzung unter sofortigem Zerlaufen des Tropfens 10 Punkte).

### I Herstellungsbeispiele

399 g Polyethylenimin mit einem zahlenmittleren Molekulargewicht (M_{W}) von ca. 25 000 wurden bei 160°C mit 96,3 g C₁₂-C₁₄-Fettsäure (Säurezahl (SZ) 271 g KOH / g) (Edenor®) C 12 70, Fa. Henkel) versetzt und 6 Stunden bei 160°C unter einem Stickstoffstrom gerührt. Das sich bildende Reaktionswasser wurde abdestilliert. Man erhält 480 g eines zu 5,0 Mol-% mit C₁₂-C₁₄-Fettsäure amidierten Polyethylenimins.

### Beispiel 2

140 g des teilweise acylierten Polyethylenimins aus Beispiel 1 wurden bei 140°C innerhalb von 0,5 Stunden mit 92,0 g Ameisensäure versetzt und weitere 4,5 Stunden bei 140°C unter einem Stickstoffstrom gerührt. Das sich bildende Reaktionswasser wurde abdestilliert. Nach beendeter Amidierung wurde auf 90°C abgekühlt und unter Rühren 450 ml vollentsalztes Wasser zugegeben. Man erhält 638 g einer ca. 30 %igen wässrigen Lösung eines zu 5,0 Mol-% mit C₁₂-C₁₄-Fettsäure und erschöpfend mit Ameisensäure amidierten Polyethylenimins.

### Beispiel 3

121 g einer 53%igen wässrigen Lösung eines Polyethylenimins mit einem zahlenmittlerem Molekulargewicht von ca. 5000 wurde bei 120°C und 25 mbar entwässert. Bei 80°C wurde das unter Stickstoff gerührte Polyethylenimin mit 15,5 g C₁₂-C₁₄-Fettsäure (SZ 271 g KOH/g) (Edenor®) C 12 70, Fa. Henkel) versetzt. Nach Erwärmen wurde 6 Stunden bei 160°C gerührt. Das sich bildende Reaktionswasser wurde abdestilliert. Nach Abkühlen auf 140°C wurden 51,8 g Ameisensäure zugetropft und 4,5 Stunden bei 140°C nachgerührt. Nach beendeter Amidierung wurde auf 90°C abgekühlt und unter Rühren 230 ml vollentsalztes Wasser zugegeben. Man erhielt 332 g einer 31,5%igen wässrigen Lösung eines zu 5,0 Mol-% mit C₁₂-C₁₄-Fettsäure und erschöpfend mit Ameisensäure amidierten Polyethylenimins.

### Beispiel 4

123 g einer 56%igen wässrigen Lösung eines Polyethylenimins mit einem zahlenmittlerem Molekulargewicht von ca. 750 000 wurde bei 120°C und 25 mbar weitgehend entwässert. Bei 80°C wurde das unter Stickstoff gerührte Polyethylenimin mit 16,6 g C₁₂-C₁₄-Fettsäure (SZ 271 g KOH/g) (Edenor®) C 12 70, Fa. Henkel) versetzt. Nach Erwärmen wurde 6 Stunden bei 160°C gerührt. Das sich bildende Reaktionswasser wurde abdestilliert. Nach Abkühlen auf 130-135°C wurden 55,2 g Ameisensäure zugetropft und 4,5 Stunden bei 130-135°C nachgerührt. Nach beendeter Amidierung wurde auf 90°C abgekühlt und unter Rühren 540 ml vollentsalztes Wasser zugegeben. Man erhielt 651 g einer 17 %igen wässrigen Lösung eines zu 5,0 Mol-% mit C₁₂-C₁₄-Fettsäure und erschöpfend mit Ameisensäure amidierten Polyethylenimins.

### Beispiel 5

67,8 g eines Polyethylenimins mit einem zahlenmittlerem Molekulargewicht von-ca. 1300 wurde bei 80°C mit 20,7 g C₁₂-C₁₄-Fettsäure (SZ 271 g KOH/g) (Edenor®) C 12 70, Fa. Henkel) versetzt. Nach Erwärmen wurde bei 160°C 6 Stunden unter einem Stickstoffstrom gerührt. Das sich bildende Reaktionswasser wurde abdestilliert. Nach Abkühlen auf 130-135°C wurden 46,0 g Ameisensäure zugetropft und 4,5 Stunden bei 130-135°C nachgerührt. Nach beendeter Amidierung wurde auf 90°C abgekühlt und unter Rühren 230 ml vollentsalztes Wasser zugegeben. Man erhielt 333 g einer 31%igen wässrigen Lösung eines zu 6,7 Mol-% mit C₁₂-C₁₄-Fettsäure und erschöpfend mit Ameisensäure amidierten Polyethylenimins.

### Beispiel 6

140 g eines Polyethylenimins mit einem zahlenmittlerem Molekulargewicht von ca. 25 000 wurde bei 80°C mit 24,3 C₁₂-C₁₄-Fettsäure (SZ = 271 g KOH/g) (Edenor®) C 12 70, Fa. Henkel) versetzt. Nach Erwärmen wurde 6 Stunden bei 160°C unter einem Stickstoffstrom gerührt. Das sich bildende Reaktionswasser wurde abdestilliert. Nach Abkühlen auf 140°C wurden 84,2 g Ameisensäure zugetropft und 4,5 Stunden bei 140°C nachgerührt. Nach beendeter Amidierung wurde auf 90°C abgekühlt und unter Rühren 830 ml vollentsalztes Wasser zugegeben. Man erhielt 1034 g einer 20%igen wässrigen Lösung eines zu 5 Mol-% mit C₁₂-C₁₄-Fettsäure und und insgesamt zu ca. 65% amidierten Polyethylenimins.

### Beispiel 7

Zu 74,1 g eines Polyethylenimins mit einem zahlenmittlerem Molekulargewicht (M_{W}) von ca. 25 000 wurden bei 75°C unter Rühren 59,3 g Ameisensäure langsam zudosiert. Dabei stieg die Temperatur auf 120°C an. Nach Erwärmen wurde 4,5 Stunden bei 130-140°C unter einem Stickstoffstrom gerührt. Das sich bildende Reaktionswasser wurde abdestilliert. Nach beendeter Amidierung wurde auf 95°C abgekühlt und unter Rühren 120 ml vollentsalztes Wasser zugegeben. Man erhielt 226 g einer 45 %igen wässrigen Lösung eines zu ca. 75 Mol-% mit Ameisensäure amidierten Polyethylenimins.

### II. Anwendungstechnische Beispiele

### Prüfbedingungen:

Die Muster wurden in einer 0,5 Gew.-%igen Lösung in voll entsalztem Wasser angesetzt und die Oberflächenspannung der 0,5%igen Lösung bestimmt (Tensiometer der Fa. Lauda, Ringmethode). Der pH-Wert der 0,5%igen Lösungen wurde bei dem Wert belassen, der sich nach dem Ansetzen der Lösung einstellt (vgl. Tabelle 2). Die zu prüfende Polypropylenfolie wurde 30 min bei Raumtemperatur mit der Lösung behandelt, getrocknet und der Randwinkel mit voll entsalztem Wasser bestimmt (Krüss Kontaktwinkelmessgerät vom Goniometertyp). Die Proben wurden zusätzlich visuell beurteilt.

### III. Anwendungstechnische Beispiele

### III.1 Messung des Randwinkels

Die Ergebnisse sind in der folgenden Tabelle 1 wiedergegeben.

**Tabelle 1**

| Beispiel-Nr. | Additiv | Randwinkel RW 1 |
|---|---|---|
| 8 (Vergleich) | kein Additiv | 105° |
| 9 (Vergleich) | handelsübliches Alkoholethoxilat | 58° |
| 10 (Vergleich) | handelsüblicher hydrophilierend wirkender Polyetherester | 86° |
| 11 | Beispiel 2 | 18° |
| 12 | Beispiel 3 | 16° |
| 13 | Beispiel 4 | 20° |
| 14 | Beispiel 5 | 21° |
| 15 | Beispiel 6 | 30° |
| 16 | Beispiel 7 | 22° |

Die RW 2-Werte unterscheiden sich bei den erfindungsgemäßen Polymeren nicht signifikant von den RW 1-Werten. Damit ist gezeigt, dass der Hydrophiliereffekt auch eine Spülung mit Wasser überdauert.

### III.2: Messung der Hydrophilie

Die Messung der Hydrophilie erfolgte wie zuvor beschrieben. Die Ergebnisse sind in der folgenden Tabelle 2 wiedergegeben.

**Tabelle 2**

| Beispiel-Nr. | Additiv | Hydrophilie |
|---|---|---|
| 17 (Vergleich) | kein Additiv | 0 |
| 18 (Vergleich) | handelsüblicher, hydrophilierend wirkender Polyetherester | 3 |
| 19 | Beispiel 2 | 10 |
| 20 | Beispiel 3 | 9 |
| 21 | Beispiel 4 | 9 |
| 22 | Beispiel 5 | 10 |
| 23 | Beispiel 6 | 9 |
| 24 | Beispiel 7 | 8 |

### III.3: Bestimmung der Affinität

### Beispiel 25:

Eine 0,05 gew.-%ige Lösung des acylierten Polylamins aus Beispiel 5 wurde auf einen pH-Wert von 7 eingestellt. Anschließend wurde ein Polypropylen-modifizierter Siliziumwafer bei Raumtemperatur mit der so erhaltenen Lösung mit einer Flussrate von 0,7 ml/min senkrecht angeströmt. Durch die Absorption des Polymeren wird eine Veränderung des Detektionssignals gegenüber einer polymerfreien Lösung beobachtet. Durch eine computergestützte Modellierung des Strahlengangs erhält man aus dieser Veränderung eine Belegung von 0,9 mg/m². Diese Belegung nimmt nicht wesentlich ab, wenn man wieder polymerfreie Lösung an die Oberfläche strömen lässt.

Die anwendungstechnischen Beispiele zeigen, dass es mit den erfindungsgemäß eingesetzten acylierten Polyaminen möglich ist, Polypropylen-Oberflächen effektiv zu hydrophilieren. Dabei zeigt keines der erfindungsgemäßen Beispiele ein signifikantes Schäumvermögen, wohingegen das als Vergleichssubstanz eingesetzte handelsübliche Alkoholethoxilat, wie die üblichen aus dem Stand der Technik bekannten nichtionischen Tenside, ein starkes bis sehr starkes Schäumvermögen zeigt. Weiterhin wird bei Einsatz der acylierten Polyamine keine signifikante Herabsetzung der Oberflächenspannung einer wässrigen Lösung beobachtet, wohingegen das als Vergleichssubstanz eingesetzte Alkoholethoxilat, wie auch ganz allgemein die aus dem Stand der Technik bekannten und als Hydrophiliermittel eingesetzten Tenside, die Oberflächenspannung stark herabsetzt.

## Patentansprüche

1. Verwendung von acylierten polymeren Polyaminen mit einem gewichtsmittleren Molekulargewicht von 1 000 bis 1 000 000, worin wenigstens ein Teil der Polyamin-Stickstoffatome Acylreste der allgemeinen Formel I
R¹-CO- (I)
trägt, worin R¹ für Wasserstoff, C₁-C₂₇-Alkyl, C₇-C₂₇-Alkenyl oder C₆-C₁₀-Aryl steht, wobei die Alkyl-, Alkenyl- und Arylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen, zur Modifizierung der Oberflächeneigenschaften fester Stoffe in Form einer Hydrophilierung teilchen-, linien-, flächenförmiger oder dreidimensionaler Gebilde.

2. Verwendung nach Anspruch 1, wobei das Gebilde in Form eines linien- oder flächenförmigen textilen Gebildes vorliegt.

3. Verwendung nach Anspruch 2, worin das textile Gebilde aus Kunststofffasern aufgebaut ist.

4. Verwendung nach Anspruch 1, wobei das Gebilde in Form einer Kunststofffolie oder eines Kunststoffformkörpers vorliegt.

5. Verwendung nach einem der vorhergehenden Ansprüche, wobei 5 bis 100 % der Polyamin-Stickstoffatome acyliert sind.

6. Verwendung nach einem der vorhergehenden Ansprüche, wobei ein Teil der Polyamin-Stickstoffatome Acylreste der allgemeinen Formel II
R²-CO- (II)
trägt, worin R² für einen C₇-C₂₇-Alkylrest oder einen C₇-C₂₇-Alkenylrest steht, wobei die Alkyl- und Alkenylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen, und ein Teil der Polyamin-Stickstoffatome Acylreste der allgemeinen Formel III
R³-CO- (III)
trägt, worin R³ für Wasserstoff, einen C₁-C₆-Alkylrest oder einen C₆-C₁₀-Arylrest steht, wobei die Alkyl- und Arylgruppen mindestens eine Substituenten, der ausgewählt ist unter Hydroxy, Alkoxy, Alkoxycarbonyl oder NE³E⁴ tragen können, wobei E³ und E⁴ gleich oder verschieden sein können und für Wasserstoff, Alkyl oder Acyl stehen.

7. Verwendung nach Anspruch 6, wobei die Reste R² und R³ eine Differenz der Zahl der Kohlenstoffatome von mindestens 4 aufweisen.

8. Verwendung nach Anspruch 6 oder 7, wobei 0,3 bis 40 % der Polyamin-Stickstoffatome einen Acylrest der Formel II aufweisen.

9. Verfahren zur Modifizierung der Oberflächeneigenschaften teilchen-, linien-, flächenförmiger oder dreidimensionaler Gebilde in Form einer Hydrophilierung, bei dem man auf die Oberfläche davon eine wirksame Menge eines acylierten polymeren Polyamins mit einem gewichtsmittleren Molekulargewicht von 1 000 bis 1 000 000 aufbringt, worin wenigstens ein Teil der Polyamin-Stickstoffatome Acylreste der Formel I
R¹-CO- (I)
trägt, worin R¹ für Wasserstoff, C₁-C₂₇-Alkyl, C₇-C₂₇-Alkenyl oder C₆-C₁₀-Aryl steht, wobei die Alkyl-, Alkenyl- und Arylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen.

10. Verfahren zur Modifizierung der Oberflächeneigenschaften teilchen-, linien-, flächenförmiger oder dreidimensionaler Gebilde in Form einer Hydrophilierung, bei dem man den Werkstoff, aus dem das Gebilde besteht, mit einer wirksamen Menge eines acylierten polymeren Polyamins mit einem gewichtsmittleren Molekulargewicht von 1 000 bis 1 000 000, worin wenigstens ein Teil der Polyamin-Stickstoffatome Acylreste der Formel I
R¹-CO- (I)
tragen, worin R¹ für Wasserstoff, C₁-C₂₇-Alkyl, C₇-C₂₇-Alkenyl oder C₆-C₁₀-Aryl steht, wobei die Alkyl-, Alkenyl- und Arylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen, modifiziert und hieraus das Gebilde herstellt.

11. Teilchen-, linien-, flächenförmiges oder dreidimensionales Gebilde, enthaltend zumindest auf seiner Oberfläche eine hydrophilisierend wirkende Menge wenigstens eines acylierten polymeren Polyamins mit einem gewichtsmittleren Molekulargewicht von 1 000 bis 1 000 000, wobei ein Teil der Polyamin-Stickstoffatome Acylreste der allgemeinen Formel II
R²-CO- (II)
trägt, worin R² für einen C₇-C₂₇-Alkylrest oder einen C₇-C₂₇-Alkenylrest steht, wobei die Alkyl- und Alkenylgruppen mindestens einen Substituenten, der ausgewählt ist unter Hydroxy, Alkoxy, Alkoxycarbonyl oder NE¹E² tragen können, wobei E¹ und E² gleich oder verschieden sein können und für Wasserstoff, Alkyl oder Acyl stehen, und ein Teil der Polyamin-Stickstoffatome Acylreste der allgemeinen Formel III
R³-CO- (III)
trägt, worin R³ für Wasserstoff, einen C₁-C₆-Alkylrest oder einen C₆-C₁₀-Arylrest steht, wobei die Alkyl- und Arylgruppen mindestens eine Substituenten, der ausgewählt ist unter Hydroxy, Alkoxy, Alkoxycarbonyl oder NE³E⁴ tragen können, wobei E³ und E⁴ gleich oder verschieden sein können und für Wasserstoff, Alkyl oder Acyl stehen, erhältlich durch Umsetzung eines polymeren Polyamins mit
a) wenigstens einer Carbonsäure der allgemeinen Formel II.1
R²-COOH (II.1)
worin
R² die zuvor angegebenen Bedeutungen besitzt, oder einem Ester, Anhydrid oder Halogenid davon, und
b) wenigstens einer Carbonsäure der allgemeinen Formel III.1
R³-COOH (III.1)
worin
R³ die zuvor angegebenen Bedeutungen besitzt,
oder einem Ester, Anhydrid oder Halogenid davon,
wobei das Polyamin in einem ersten Reaktionsschritt mit wenigstens einer langkettigen Carbonsäure und anschließend in einem zweiten Reaktionsschritt mit wenigstens einer kurzkettigen Carbonsäure umgesetzt wird, wobei die Edukte im ersten Reaktionsschritt in einem solchen molaren Verhältnis eingesetzt werden, dass, bezogen auf den Gesamtstickstoffgehalt des Polyamins 0,3 bis 15 Mol-% der Polyamin-Stickstoffe acyliert werden und einen Acylrest der Formel II aufweisen.

## Claims

1. The use of acylated polymeric polyamines with a weight-average molecular weight of from 1000 to 1 000 000, where at least some of the polyamine nitrogen atoms bear acyl radicals of the general formula I
R¹-CO- (I)
where R¹ is hydrogen, C₁-C₂₇-alkyl, C₇-C₂₇-alkenyl or C₆-C₁₀-aryl, and where the alkyl, alkenyl and aryl groups may bear at least one substituent selected from the group consisting of hydroxy, alkoxy, alkoxycarbonyl and NE¹E², where E¹ and E² may be identical or different and are hydrogen, alkyl or acyl, for modifying the surface properties of solids by hydrophilicizing particulate, linear, sheet-like or three-dimensional structures.

2. The use according to claim 1, where the structure takes the form of a linear or sheet-like textile structure.

3. The use according to claim 2, in which the textile structure has been built up from synthetic fibers.

4. The use according to claim 1, where the structure takes the form of a plastic film or plastic molding.

5. The use according to any of the preceding claims, where from 5 to 100% of the polyamine nitrogen atoms have been acylated.

6. The use according to any of the preceding claims, where some of the polyamine nitrogen atoms bear acyl radicals of the general formula II
R²-CO- (II)
where R² is a C₇-C₂₇-alkyl radical or a C₇-C₂₇-alkenyl radical, and where the alkyl and alkenyl groups may bear at least one substituent selected from the group consisting of hydroxyl, alkoxy, alkoxycarbonyl, and NE¹E², where E¹ and E² may be identical or different and are hydrogen, alkyl, or acyl, and some of the polyamine nitrogen atoms bear acyl radicals of the general formula III
R³-CO- (III)
where R³ is hydrogen, a C₁-C₆-alkyl radical or a C₆-C₁₀-aryl radical, and where the alkyl and aryl groups may bear at least one substituent selected from the group consisting of hydroxy, alkoxy, alkoxycarbonyl, and NE³E⁴, where E³ and E⁴ may be identical or different and are hydrogen, alkyl or acyl.

7. The use according to claim 6, where the number of carbon atoms in R² and R³ differs by at least 4.

8. The use according to claim 6 or 7, where from 0.3 to 40% of the polyamine nitrogen atoms have an acyl radical of the formula II.

9. A hydrophilicizing process for modifying the surface properties of particulate, linear, sheet-like, or three-dimensional structures, in which an effective amount of an acylated polymeric polyamine with a weight-average molecular weight of from 1000 to 1 000 000 is applied to the surface of the structures, where at least some of the polyamine nitrogen atoms bear acyl radicals of the formula I
R¹-CO- (I)
where R¹ is hydrogen, C₁-C₂₇-alkyl, C₇-C₂₇-alkenyl or C₆-C₁₀-aryl, and where the alkyl, alkenyl and aryl groups may bear at least one substituent selected from the group consisting of hydroxyl, alkoxy, alkoxycarbonyl and NE¹E², where E¹ and E² may be identical or different and are hydrogen, alkyl or acyl.

10. A hydrophilicizing process for modifying the surface properties of particulate, linear, sheet-like, or three-dimensional structures, in which the material of which the structure is composed is modified with an effective amount of an acylated polymeric polyamine with a weight-average molecular weight of from 1000 to 1 000 000, where at least some of the polyamine nitrogen atoms bear acyl radicals of the formula I
R¹-CO- (I)
where R¹ is hydrogen, C₁-C₂₇-alkyl, C₇-C₂₇-alkenyl or C₆-C₁₀-aryl, and where the alkyl, alkenyl and aryl groups may bear at least one substituent selected from the group consisting of hydroxy, alkoxy, alkoxycarbonyl and NE¹E², where E¹ and E² may be identical or different and are hydrogen, alkyl or acyl, and used to produce the structure.

11. A particulate, linear, sheet-like, or three-dimensional structure comprising, at least on its surface, a hydrophilicizing amount of at least one acylated polymeric polyamine with a weight-average molecular weight of from 1000 to 1 000 000, where some of the polyamine nitrogen atoms bear acyl radicals of the general formula II
R²-CO- (II)
where R² is a C₇-C₂₇-alkyl radical or a C₇-C₂₇-alkenyl radical, where the alkyl and alkenyl groups may bear at least one substituent selected from the group consisting of hydroxy, alkoxy, alkoxycarbonyl and NE¹E², where E¹ and E² may be identical or different and are hydrogen, alkyl or acyl, and some of the polyamine nitrogen atoms bear acyl radicals of the general formula III
R³-CO- (III)
where R³ is hydrogen, a C₁-C₆-alkyl radical or a C₆-C₁₀-aryl radical, where the alkyl and aryl groups may bear at least one substituent selected from the group consisting of hydroxy, alkoxy, alkoxycarbonyl and NE³E⁴, where E³ and E⁴ may be identical or different and are hydrogen, alkyl or acyl, obtainable via reaction of a polymeric polyamine with
a) at least one carboxylic acid of the general formula II.1
R²-COOH (II.1)
where
R² is as defined above,
or with an ester, anhydride or halide thereof, and
b) at least one carboxylic acid of the general formula III.1
R³-COOH (III.1)
where
R³ is as defined above,
or with an ester, anhydride or halide thereof,
where, in a first step of the reaction, the polyamine is reacted with at least one long-chain carboxylic acid, and then, in a second step of the reaction, it is reacted with at least one short-chain carboxylic acid, where the molar ratio in which the starting materials are used in the first step of the reaction is such that, based on the total nitrogen content of the polyamine, from 0.3 to 15 mol% of the polyamine nitrogens are acylated and have an acyl radical of the formula II.

## Revendications

1. Utilisation de polyamines polymères acylées ayant une masse moléculaire moyenne en poids allant de 1 000 à 1 000 000, dans lesquelles au moins une partie des atomes d'azote de la polyamine porte des groupes acyle de formule générale I
R¹-CO- (I)
où R¹ représente un atome d'hydrogène, un groupe alkyle en C₁ à C₂₇, alcényle en C₇ à C₂₇ ou aryle en C₆ à C₁₀, les groupes alkyle, alcényle et aryle pouvant porter au moins un substituant qui est choisi parmi un groupe hydroxy, alcoxy, alcoxycarbonyle ou NE¹E², où E¹ et E² peuvent être identiques ou différents et représentent un atome d'hydrogène, un groupe alkyle ou acyle, pour la modification des propriétés de surface de matières solides prenant la forme d'une hydrophilisation d'objets particulaires, linéaires, planiformes ou en trois dimensions.

2. Utilisation selon la revendication 1, où l'objet se présente sous la forme d'un objet textile linéaire ou planiforme.

3. Utilisation selon la revendication 2, où l'objet textile est composé de fibres synthétiques.

4. Utilisation selon la revendication 1, où l'objet se présente sous la forme d'un film de matière synthétique ou d'un corps moulé de matière synthétique.

5. Utilisation selon l'une quelconque des revendications précédentes, où 5% à 100% des atomes d'azote de la polyamine sont acylés.

6. Utilisation selon l'une quelconque des revendications précédentes, où une partie des atomes d'azote de la polyamine porte des groupes acyle de formule générale II
R²-CO- (II)
dans laquelle R² représente un groupe alkyle en C₇ à C₂₇ ou un groupe alcényle en C₇ à C₂₇, les groupes alkyle et alcényle pouvant porter au moins un substituant qui est choisi parmi un groupe hydroxy, alcoxy, alcoxycarbonyle ou NE¹E², où E¹ et E² peuvent être identiques ou différents et représentent un atome d'hydrogène, un groupe alkyle ou acyle, et une partie des atomes d'azote de la polyamine porte des groupes acyle de formule générale III
R³-CO- (III)
dans laquelle R³ représente un atome d'hydrogène, un groupe alkyle en C₁ à C₆ ou un groupe aryle en C₆ à C₁₀, les groupes alkyle et aryle pouvant porter au moins un substituant qui est choisi parmi un groupe hydroxy, alcoxy, alcoxycarbonyle ou NE³E⁴, où E³ et E⁴ peuvent être identiques ou différents et représentent un atome d'hydrogène, un groupe alkyle ou acyle.

7. Utilisation selon la revendication 6, où les groupes R² et R³ présentent une différence du nombre d'atomes de carbone d'au moins 4.

8. Utilisation selon la revendication 6 ou 7, où 0,3% à 40% des atomes d'azote de la polyamine présentent un groupe acyle de formule II.

9. Procédé de modification des propriétés de surface d'objets particulaires, linéaires, planiformes ou en trois dimensions, prenant la forme d'une hydrophilisation, à la surface desquels on dépose une quantité efficace d'une polyamine polymère acylée ayant une masse moléculaire moyenne en poids allant de 1 000 à 1 000 000, dans laquelle au moins une partie des atomes d'azote de la polyamine porte des groupes acyle de formule I
R¹-CO- (I)
dans laquelle R¹ représente un atome d'hydrogène, un groupe alkyle en C₁ à C₂₇, alcényle en C₇ à C₂₇ ou aryle en C₆ à C₁₀, les groupes alkyle, alcényle et aryle pouvant porter au moins un substituant qui est choisi parmi un groupe hydroxy, alcoxy, alcoxycarbonyle ou NE¹E², où E¹ et E² peuvent être identiques ou différents et représentent un atome d'hydrogène, un groupe alkyle ou acyle.

10. Procédé de modification des propriétés de surface d'objets particulaires, linéaires, planiformes ou en trois dimensions, prenant la forme d'une hydrophilisation, dans lequel on modifie le matériau dont l'objet est composé avec une quantité efficace d'une polyamine polymère acylée ayant une masse moléculaire moyenne en poids allant de 1 000 à 1 000 000, dans laquelle au moins une partie des atomes d'azote de la polyamine portent des groupes acyle de formule I
R¹-CO- (I)
dans laquelle R¹ représente un atome d'hydrogène, un groupe alkyle en C₁ à C₂₇, alcényle en C₇ à C₂₇ ou aryle en C₆ à C₁₀, les groupes alkyle, alcényle et aryle pouvant porter au moins un substituant qui est choisi parmi un groupe hydroxy, alcoxy, alcoxycarbonyle ou NE¹E², où E¹ et E² peuvent être identiques ou différents et représentent un atome d'hydrogène, un groupe alkyle ou acyle, et à partir duquel on fabrique l'objet.

11. Objet particulaire, linéaire, planiforme ou en trois dimensions, contenant au moins sur sa surface une quantité à activité hydrophilisante d'au moins une polyamine polymère acylée ayant une masse moléculaire moyenne en poids allant de 1 000 à 1 000 000, dans laquelle une partie des atomes d'azote de la polyamine porte des groupes acyle de formule générale II
R²-CO- (II)
dans laquelle R² représente un groupe alkyle en C₇ à C₂₇ ou un groupe alcényle en C₇ à C₂₇, les groupes alkyle et alcényle pouvant porter au moins un substituant qui est choisi parmi un groupe hydroxy, alcoxy, alcoxycarbonyle ou NE¹E², où E¹ et E² peuvent être identiques ou différents et représentent un atome d'hydrogène, un groupe alkyle ou acyle, et une partie des atomes d'azote de la polyamine porte des groupes acyle de formule générale III
R³-CO- (III)
dans laquelle R³ représente un atome d'hydrogène, un groupe alkyle en C₁ à C₆ ou un groupe aryle en C₆ à C₁₀, les groupes alkyle et aryle pouvant porter au moins un substituant qui est choisi parmi un groupe hydroxy, alcoxy, alcoxycarbonyle ou NE³E⁴, où E³ et E⁴ peuvent être identiques ou différents et représentent un atome d'hydrogène, un groupe alkyle ou acyle, pouvant être obtenu en faisant réagir une polyamine polymère avec
a) au moins un acide carboxylique de formule générale II.1
R²-COOH (II.1)
dans laquelle
R² a la signification mentionnée précédemment,
ou avec un des ses esters, anhydrides ou halogénures, et
b) au moins un acide carboxylique de formule générale III.1
R³-COOH (III.1)
dans laquelle
R³ a la signification mentionnée précédemment,
ou avec un des ses esters, anhydrides ou halogénures,
où, dans une première étape de réaction, l'on fait réagir la polyamine avec au moins un acide carboxylique à longue chaîne puis, dans une deuxième étape de réaction, avec au moins un acide carboxylique à chaîne courte, en mettant en oeuvre les éduits dans la première étape de réaction dans un rapport molaire tel que, par rapport à la teneur totale en azote de la polyamine, 0,3% à 15% en moles des atomes d'azote de la polyamine sont acylés et présentent un groupe acyle de formule II.
